# EUROPÄISCHE PATENTSCHRIFT

(11) **EP 0 737 321 B1**
(45) Veröffentlichungstag und Bekanntmachung des Hinweises auf die Patenterteilung: **29.12.1999**
(21) Anmeldenummer: 95935810.2
(22) Anmeldetag: 26.10.1995
(51) Int. Cl.: G01S 13/91, G01S 13/93

(54) **VERFAHREN ZUR ÜBERWACHUNG DES SCHIFFSVERKEHRS AUF SEE MIT ERKENNUNG VON ÖLVERSCHMUTZUNGEN UND POTENTIELLEN SCHIFFSKOLLISIONEN**
PROCESS FOR MONITORING SEABORNE TRAFFIC WITH DETECTION OF OIL POLLUTION AND POTENTIAL COLLISIONS
PROCEDE DE CONTROLE DU TRAFIC MARITIME AVEC DETECTION DE LA POLLUTION PAR LE PETROLE ET DES RISQUES DE COLLISION

(30) Priorität: 27.10.1994 DE 4438325
(43) Veröffentlichungstag der Anmeldung: 16.10.1996
(73) Patentinhaber: DORNIER GmbH, 88039 Friedrichshafen (DE)
(72) Erfinder: SCHÜSSLER, Harald, D-88718 Daisendorf (DE); HERRMANN, Jörg, D-88682 Salem (DE); LANGEMANN, Manfred, D-88719 Stetten (DE)
(74) Vertreter: Landsmann, Ralf
(86) Internationale Anmeldenummer: DE9501487
(87) Internationale Veröffentlichungsnummer: WO9613733

(56) Entgegenhaltungen:
- US-A- 5 248 979
- IEICE TRANSACTIONS ON COMMUNICATIONS, Bd. E75-B, Nr. 8, August 1992 TOKYO JP, Seiten 755-765, XP 000316095 GALATI ET AL. 'Space-Radar Surveillance: Concepts and Architectures'
- PROCEEDINGS OF THE IEEE, Bd. 79, Nr. 6, Juni 1991 NEW YORK US, Seiten 839-849, XP 000262357 KEITH RANEY ET AL. 'Radarsat'
- OCEANS '93 PROCEEDINGS, Bd. III, 18. - 21.Oktober 1993 VICTORIA, BC, USA, Seiten III-1-III-6, XP 000509540 BJERKELUND ET AL. 'current RDDP activities in oceanography'

## Beschreibung

Die Erfindung betrifft ein Verfahren zur schnellen Erkennung von Olverschmutzungen auf See und zur Navigationshilfe für den Schiffsverkehr bei Kollisionsgefahr zwischen Schiffen und bei Auftreten von Eisbergen

Ein satellitengestütztes Beobachtungssystem mit einem SAR-Radar zur Überwachung von Schiffahrtsstraßen und zur Detektion von Ölverschmutzungen ist aus der US 5 248 979 bekannt.

Beobachtung und Detektion von Ölverschmutzungen werden bereits an einigen Küsten (z.B. die Nordseeküste der Niederlande) routinemässig durchgeführt. Hierbei werden sogenannte 'Coast-Guard' Flugzeuge eingesetzt, die jedoch aufgrund ihrer begrenzten Einsatzreichweite nur einen relativ schmalen Küstenstreifen von ca. 2 bis 3 Seemeilen beobachten können. Die Detektion von Ölverschmutzungen wird auf visueller Basis von den Piloten selber durchgeführt. Diese Methode ist deshalb nur während der Tageszeiten und bei günstigen Wetterverhältnissen anwendbar.

In einem Pilotprogramm wurde an der deutschen Nordseeküste eine Öldetektions-Kampagne mit einem Radar-Sensor bestückten Flugzeug durchgeführt.

Mit diesem Radar-Sensor (SAR System, SAR = Synthetic Aperture Radar) ist zwar die Detektion von Ölverschmutzungen auf See auch während der Nachtzeiten möglich, aber aufgrund der geringen Einsatzreichweite der Flugzeuge ist eine routinemässige Beobachtung grösserer Seegebiete ebenfalls nicht möglich.

Die heute eingesetzten Satelliten ERS-1 und ERS-2 der ESA sind mit vergleichbaren Radar-Sensoren ausgerüstet und erlauben aufgrund ihrer globalen Abdeckung auch eine Öldetektion in Gebieten ausserhalb der 2 bis 3 Meilen breiten Küstenstreifen. Die effektive Streifenbreite dieser Sensoren liegt bei ca. 100 km. Die Wiederholrate dieser Satelliten, d.h. die Zeitdauer, bis ein bestimmter Punkt auf der Erdoberfläche wiederholt beobachtet werden kann, beträgt jedoch ca. 13 Tage (beobachtet werden kann während der Nachtzeit und während der Tageszeit).

Eine routinemässige Detektion von möglichen Ölverschmutzungen und die Identifizierung des potentiellen Verursachers ist erst dann möglich, wenn die Wiederholrate auf ca. 3 Stunden reduziert werden kann, d.h. wenn der örtliche Abstand zwischen der Position der Ölverschmutzung und der Position eines Schiffes auf weniger als 50 km reduziert werden kann. Dies würde eine Satellitenkonstellation vom Typ ERS mit ca. 100 Einzelsatelliten bedürfen. Aufgrund der hohen Beschaffungskosten der Satelliten und der bodenseitigen Operationskosten steht der damit verbundene finanzielle Aufwand für ein derartiges System in keinem Verhältnis zum ökonomischen Einsparpotential (z.B. Kosten der Ölbeseitigung, Kosten zu Behebung der ökologischen Schäden).

Aufgabe der Erfindung ist die Einrichtung eines Gesamtsystems unter Verwendung an sich bekannter Einzelelemente zur Erkennung von Eisbergen und Olverschmutzungen auf See in Verbindung mit einer Überwachung und Steuerung von Schiffsbewegungen auf See zur Vermeidung möglicher Kollisionen zwischen Schiffen und von Schiffen mit Eisbergen, sowie zur Identifikation der Verursacher von Ölverschmutzungen auf See.

Diese Aufgabe wird mit einem Verfahren nach dem Patentanspruch gelöst.

Die Anzahl der notwendigen Satelliten für die routinemässige Detektion von möglichen Ölverschmutzungen und die Identifizierung des potentiellen Verursachers kann dadurch reduziert werden, dass der zugreifbare Beobachtungsstreifen am Boden verbreitert wird. Eine Verbreiterung des Beobachtungsstreifens ist in etwa proportional zur Reduzierung der Anzahl der Satelliten. Dies kann erreicht werden durch:
a) Montage eines zweiten Radar-Sensors, so dass ein linksseitig und ein rechtsseitiger Streifen am Boden beobachtet werden kann oder
b) einer Schwenkung des Satelliten quer zur Flugrichtung.

Für den Fall a) kann die Anzahl der Satelliten auf etwa die Hälfte reduziert werden. Für den Fall b) kann die Anzahl der Satelliten um etwa den Faktor 5 reduziert werden. Werden beide Massnahmen kombiniert, kann ein theoretischer Reduktionsfaktor von ca. 10 erzielt werden. Eine häufige Schwenkung des Satelliten auf das jeweils zu beobachtende Zielgebiet ist jedoch mit sehr hohem bordseitigen Energieaufwand verbunden, der die Lebensdauer der Satelliten im Orbit entsprechend reduziert. Darüber hinaus beträgt die Zeitdauer für eine Satellitenschwenkung mehrere Minuten. Da während dieser Zeitdauer keine Beobachtungen möglich sind, ist der resultierende effektive Reduktionsfaktor erheblich kleiner (ca. 2 bis 3).

Erfindungsgemäss verwendete Radar-Sensoren mit Einzelstrahlern (sogenannte Phased Array Antennen) erlauben eine elektronische Schwenkung des Sensors innerhalb weniger Millisekunden. Durch eine geeignete Anordnung der Einzelstrahler kann der zugreifbare Beobachtungsstreifen am Boden auf ca. 400 - 500 km erweitert werden, der effektive Beobachtungsstreifen beträgt dann ca. 50 - 100 km. In Verbindung mit einem rechtsseitigen und linksseitigen Radar-Sensor können diese Werte nochmals verdoppelt werden. Damit beträgt der zugreifbare Beobachtungsstreifen ca. 1000 km und ist somit um den Faktor 10 grösser als bei den heutigen ERS Satelliten.

Die Wiederholrate eines derartigen Satelliten beträgt dann etwa 1.3 Tage oder 32 Stunden. Um die geforderte Wiederholrate von beispielsweise 3 Stunden zu erreichen, wäre demzufolge eine Konstellation von nur 10 Satelliten notwendig. Sollen darüber hinaus nur die nördlichen Seegebiete ab ca. 30 Grad geographischer Breite beobachtet werden (z.B. Nordatlantik), reduziert sich die notwendige Anzahl der Satelliten auf ca. 9.

Das erfindungsgemässe Verfahren beinhaltet folgende Funktionen:
- Erkennung von Ölverschmutzungen und Eisbergen auf See mittels satellitengestützter Phased Array Mikrowelleninstrumente mit einem zugreifbaren Streifen am Boden von etwa 1000 km
- Genaue Positionsbestimmung der am System angeschlossenen Schiffe
- die Kommunikation zwischen den am System angeschlossenen Schiffen und den zum System gehörenden Satelliten, sowie die Kommunikation zwischen den Satelliten und einer Überwachungszentrale

Die vorteilhafte Verknüpfung dieser Einzelfunktionen zu einem Gesamtsystem erlaubt:
- eine erhebliche Reduzierung der Anzahl der notwendigen Satelliten im Vergleich zu der heute eingesetzten Technologie
- die zentrale Überwachung und Rekonstruktion der Schiffsbewegungen auf See
- eine zentrale eindeutige Identifizierung der Verursacher von Ölverschmutzungen auf See
- die zentrale rechtzeitige Erstellung und gezielte Verbreitung von Warnmeldungen über mögliche Kollisionskurse (Schiff/Schiff und Schiff/Eisberg)

Die Erfindung wird nachfolgend anhand einer Figur näher erläutert.

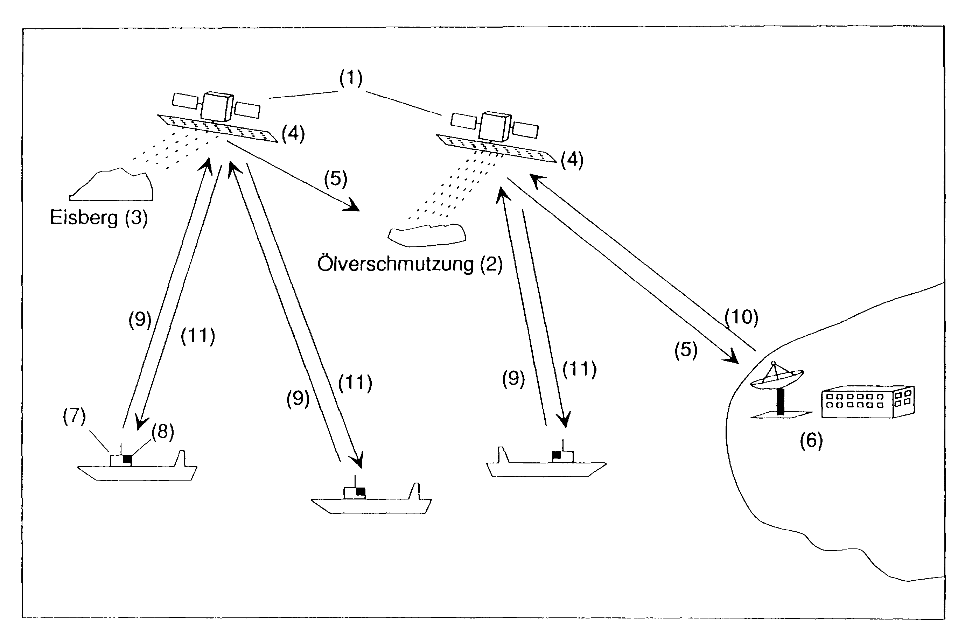

Das Gesamtsystem ist in der Figur dargestellt und besteht aus einem System von Satelliten **1**, die die Meeresoberfläche nach Ölverschmutzungen **2** und Eisbergen **3** mit geeigneten Aufnahmesensoren **4** beobachten. Wird vom Aufnahmesensor die Präsenz von Ölverschmutzungen und Eisbergen erkannt, werden sowohl die geographische Position als auch die Grösse der Ölverschmutzungen und Eisberge mit Hilfe einer Datenübertragungsstrecke **5** an die Systemzentrale **6** übermittelt. Desweiteren besteht das System aus einem Schiffsterminal **7**, welches auf den am System angeschlossenen Schiffen fest installiert ist. Das Schiffsterminal ermittelt durch eine geeignete Einrichtung **8** die aktuelle Position des Schiffes und sendet unter Zuhilfenahme der Datenübertragungsstrecke **9** diese Positionsinformation zu dem Satellit, der zum gegebenen Zeitpunkt im Sichtbarkeitsbereich des Schiffsterminals liegt. Die vom Satellit empfangene Schiffsposition wird dort solange gespeichert, bis die Positionsinformation mit Hilfe der Datenübertragungsstrecke **5** an die Systemzentrale übermittelt.

In der Systemzentrale werden die Positionen aller an das System angeschlossenen Schiffe ausgewertet und mit den verfügbaren Positionsinformationen der Olverschmutzungen und Eisberge verglichen. Der Vergleich dieser Daten erlaubt die Identifizierung des Verursacher einer Ölverschmutzung, sowie die Berechnung von Vorhersagen möglicher Kollisionen zwischen zwei Schiffen und/oder potentieller Kollisionsgefahren zwischen Eisbergen und Schiffen.

Im Falle der Identifizierung des Verursachers einer Ölverschmutzung kann diese Information zwecks strafrechtlicher Massnahmen und Schadensregulierungsmassnahmen an die verantwortlichen Seeämter und Versicherungen weitergeleitet werden.

Im Falle von Vorhersagen von möglichen Kollisionen können entsprechende Warnmeldungen über die Datenstrecken **10** und **11** an die betroffenen Schiffsterminals weitergeleitet werden.

## Patentansprüche

1. Verfahren zur routinemässigen Überwachung des Schiffsverkehrs auf See, wobei
- von einem System bestehend aus weniger als 10 Satelliten Olverschmutzungen und Eisberge auf der Meeresoberfläche mittels Phased Array SAR Mikrowellen-Sensoren beobachtet und erkannt werden,
- die Daten der Position und die Grösse der Ölverschmutzung und der Eisberge an eine Zentrale übertragen werden,
- die aktuelle Position von den am System angeschlossenen Schiffen mittels der oben genannten Satelliten an die Zentrale übertragen wird,
- in der Zentrale die Daten der Position und Grösse der Ölverschmutzung und Eisberge, sowie die Position aller angeschlossenen Schiffe ausgewertet wird,
- die Auswertung der Daten zur Identifizierung des Verursachers von Ölverschmutzungen benutzt wird,
- die Auswertung der Daten eine Vorhersage von möglichen Kollisionsgefahren zwischen zwei oder mehreren Schiffen erlaubt,
- die Auswertung der Daten mögliche Kollisionen zwischen einem Schiff und Eisbergen zeigt und
- die mögliche Kollision in Form einer Warnmeldung mittels der oben genannten Satelliten an die betroffenen Schiffe geleitet wird.

## Claims

1. Process for the routine monitoring of sea-borne traffic, wherein
- oil spills and icebergs on the surface of the sea are observed and detected by a system comprising fewer than 10 satellites by means of phased array SAR microwave sensors,
- the data of the position and the size of the oil spill and the icebergs are transmitted to a central station,
- the current position of the ships connected to the system is transmitted to the central station by means of the above-mentioned satellites,
- the data of the position and size of the oil spill and icebergs, and also the position of all connected ships are evaluated in the central station,
- the evaluation of the data is used to identify the causer of oil spills,
- the evaluation of the data enables possible risks of collision between two or more ships to be forecast,
- the evaluation of the data shows possible collisions between a ship and icebergs and
- the possible collision is conveyed to the ships concerned in the form of a warning signal by means of the above-mentioned satellites.

## Revendications

1. Procédé pour le contrôle de routine du trafic maritime, dans lequel
- un système constitué de moins de 10 satellites observe et détecte la pollution par pétrole et les icebergs à la surface de la mer, au moyen d'un réseau à commande de phase de capteurs à micro-ondes SAR,
- les données de la position et l'étendue de la pollution par pétrole ainsi que des icebergs sont transmises à une centrale,
- la position actuelle des navires connectés au système est transmise à la centrale au moyen des satellites précités,
- dans la centrale les données de la position et l'étendue de la pollution par pétrole et des icebergs, ainsi que la position de tous les navires connectés sont exploitées,
- l'exploitation des données est utilisée pour identifier le responsable de la pollution par pétrole,
- l'exploitation des données permet de pronostiquer d'éventuels risques de collision entre deux navires ou plus,
- l'interprétation des données indique une collision potentielle entre un navire et des icebergs et
- la collision potentielle est transmise aux navires concernés, au moyen des satellites précités, sous la forme d'un messaqe d'avertissement.
